# EUROPÄISCHE PATENTSCHRIFT

(11) **EP 1 150 056 B1**
(45) Veröffentlichungstag und Bekanntmachung des Hinweises auf die Patenterteilung: **04.08.2004**
(21) Anmeldenummer: 01890119.9
(22) Anmeldetag: 20.04.2001
(51) Int. Cl.: F16L 47/06, F16L 33/22

(54) **Anschlussvorrichtung für ein Kunststoffrohr**
Connecting device for a plastic pipe
Dispositif de raccordement pour un tuyau en plastique

(30) Priorität: 28.04.2000 AT 7472000
(43) Veröffentlichungstag der Anmeldung: 31.10.2001
(73) Patentinhaber: KE-KELIT Kunststoffwerk Gesellschaft m.b.H., A-4017 Linz (AT)
(72) Erfinder: Rametsteiner, Karl, 4040 Linz (AT)
(74) Vertreter: Hübscher, Helmut, Dipl.-Ing.

(56) Entgegenhaltungen:
- EP-A- 0 728 979
- DE-A- 19 702 289
- DE-U- 29 621 046
- GB-A- 2 174 468

## Beschreibung

Die Erfindung bezieht sich auf Anschlußvorrichtung für ein Kunststoffrohr mit einer das Anschlußende des Kunststoffrohres aufnehmenden Hülse, in der ein mit einem Gegenkonus zusammenwirkender, axial verschiebbarer, konischer Klemmring vorgesehen ist, der auf der dem Gegenkonus abgekehrten Ringseite gegen die Rohrwandung vorstehende, widerhakenartige Rückhaltekrallen für das Anschlußende des Kunststoffrohres aufweist, wobei das Anschlußende des Kunststoffrohres zwischen der Hülse und einem Anschlußnippel gehalten ist (siehe, zum Beispiel, Dokument GB-A-2 174 468).

Zur Verbindung zweier Kunststoffrohre ist der Einsatz von Kupplungsmuffen bekannt (DE 299 14 160 U1), die im Bereich ihrer offenen Enden Aufnahmen für die zu verbindenden Rohre bilden. Im Bereich dieser Aufnahmen sind innerhalb der Kupplungsmuffe Klemmringe vorgesehen, die sich mit einem Außenkonus an einem durch die Kupplungsmuffe gebildeten Innenkonus abstützen, der sich gegen das zugehörige Muffenende verjüngt. Auf der dem Außenkonus gegenüberliegenden Innenseite des Klemmringes sind widerhakenartige Rückhalteklauen in Form von Umfangsrippen vorgesehen, die das Einführen des jeweils in die Kupplungsmuffe eingeführten Anschlußendes eines Rohres erlauben, sich jedoch beim Versuch, das Anschlußende wieder aus der Kupplungsmuffe herauszuziehen, im Außenmantel des Anschlußendes verkrallen. Aufgrund der sich zwischen dem Klemmring und dem Anschlußende des Kunststoffrohres ergebenden formschlüssigen Verbindung wird der Klemmring über das Anschlußende in den sich in Ausziehrichtung verjüngenden Innenkonus der Kupplungsmuffe eingezogen, was eine Verringerung des Durchmessers des geschlitzten Klemmringes und damit eine Verstärkung der Verkrallung zwischen Klemmring und dem Anschlußende des Kunststoffrohres zur Folge hat, so daß es innerhalb der Aufnahme der Kupplungsmuffe festgehalten wird. Die Verkrallung zwischen dem Klemmring und dem Anschlußende des Kunststoffrohres hängt allerdings vom Verhältnis des Außendurchmessers des Kunststoffrohres zum Innendurchmesser des Klemmringes ab. Da der Außendurchmesser eines Kunststoffrohres mit einem vorgegebenen Nenndurchmesser, der sich auf den Strömungsquerschnitt bezieht, in Abhängigkeit vom Aufbau des Rohrmantels unterschiedlich ausfallen kann, können diese bekannten Kupplungsmuffen wegen des vergleichsweise großen Streubereiches der auf einen Nenndurchmesser bezogenen Außendurchmesser verschiedener Kunststoffrohre nur für eine Gruppe von Kunststoffrohren mit einem vorgegebenen Außendurchmesser eine auch höheren Anforderungen entsprechende zugfeste Verbindung sicherstellen.

Der Erfindung liegt somit die Aufgabe zugrunde, eine Anschlußvorrichtung für ein Kunststoffrohr der eingangs geschilderten Art zu schaffen, die eine zugfeste Klemmung der Anschlußenden von Rohren mit einem gegebenen Nenndurchmesser weitgehend unabhängig vom jeweiligen Außendurchmesser gewährleistet.

Die Erfindung löst die gestellte Aufgabe dadurch, daß, der Anschlußnippel einen sich gegen das freie Nippelende hin erweiternden Außenkonus als Gegenkonus bildet und den mit einem Innenkonus gegen das freie Nippelende hin auf den Gegenkonus aufschiebbaren Klemmring trägt, dessen Rückhaltekrallen radial nach außen abstehen.

Die Erfindung geht von dem Umstand aus, daß im Gegensatz zum Rohraußendurchmesser der sich auf den Strömungsquerschnitt beziehende Nenndurchmesser eines Kunststoffrohres einen vergleichsweise geringen Toleranzbereich aufweist, so daß bei einer Klemmung des Anschlußendes eines Kunststoffrohres von dessen Innenseite her mit Toleranzbereichen gerechnet werden kann, die auch höheren Anforderungen an die Zugbelastbarkeit des angeschlossenen Kunststoffrohres genügen, wie sie beispielsweise bei der Verbindung von metallischen Formstücken mit dem Kunststoffrohr bei Wasserinstallationen gefordert werden. In diesem Zusammenhang ist außerdem festzuhalten, daß es auf diesem Anwendungsgebiet üblich ist, den Innendurchmesser von Rohren zu kalibrieren. In der Regel geschieht dies durch ein geringfügiges spanendes Ausreiben mittels eines Handfräsers oder durch Einführen eines Kalibrierkegels oder einer Kalibrierkugel zur mechanischen Verformung eines allfällig oval verformten Rohres.

Damit eine entsprechende Verkrallung zwischen dem Klemmring und dem Anschlußende des Kunststoffrohres auf der Rohrinnenseite sichergestellt werden kann, wird der geschlitzte Klemmring auf einem Anschlußnippel gelagert, der einen sich gegen das freie Nippelende hin erweiternden Außenkonus bildet, so daß der Klemmring mit seinem Innenkonus gegen das freie Nippelende hin auf den Außenkonus unter einer entsprechenden Ringerweiterung aufgeschoben werden kann. Wird daher nach einem Aufschieben des Anschlußendes auf den Anschlußnippel über den Klemmring hinweg das Kunststoffrohr einer abziehenden Zugbelastung unterworfen, so dringen die gegen die Rohrinnenwandung vorstehenden, widerhakenartigen Rückhaltekrallen aufgrund der vergleichsweise geringen Toleranz des Rohrinnendurchmessers in den Rohrmantel formschlüssig ein, wobei die mit der axialen Ausschubbewegung des Klemmringes verbundene Aufweitung entlang des Gegenkonus eine sichere Halterung des Anschlußendes des Kunststoffrohres auf dem Anschlußnippel mit sich bringt, zumal die das Anschlußende im Bereich des Anschlußnippels umschließende Hülse ein unzulässiges Aufweiten des Anschlußendes verhindert, das somit zusätzlich zwischen dem Klemmring und der Hülse einer radialen Klemmung unterworfen wird.

Damit die Aufstecklänge des Anschlußendes eines Kunststoffrohres auf dem Anschlußnippel konstruktiv vorgegeben werden kann, wird im allgemeinen der Anschlußnippel einen Anschlagflansch in einem entsprechenden Abstand vom freien Nippelende aufweisen. Die Hülse ist dann mit diesem Anschlagflansch in axialer Richtung verschiebefest zu verbinden, um eine Hülsenverlagerung zu vermeiden und das auf den Anschlußnippel aufgeschobene Anschlußende des Kunststoffrohres schützend abzudecken. Diese verschiebefeste Verbindung zwischen Anschlagflansch und Hülse kann durch ein Kleben oder Schweißen erfolgen. Besonders einfache Montageverhältnisse ergeben sich allerdings, wenn die Hülse den Anschlagflansch schnappverschlußartig übergreift.

Damit ein ordnungsgemäßes Aufschieben des Anschlußendes eines Kunststoffschlauches auf den Anschlußnippel vorteilhaft überprüft werden kann, kann die Hülse im Bereich des Anschlagflansches mit wenigstens einer Schauöffnung versehen werden. Da mit Wärmedehnungen eines auf den Anschlußnippel aufgeschobenen Kunststoffrohres gerechnet werden muß, kann schließlich vorgesehen werden, daß der Klemmring zwischen dem Gegenkonus und dem Anschlagflansch auf dem Anschlußnippel axial frei verschiebbar gelagert ist, so daß durch diese freie Verschiebbarkeit des Klemmringes axiale Verlagerungen des Anschlußendes eines Kunststoffrohres beispielsweise zufolge von Wärmedehnungen vorteilhaft berücksichtigt werden können.

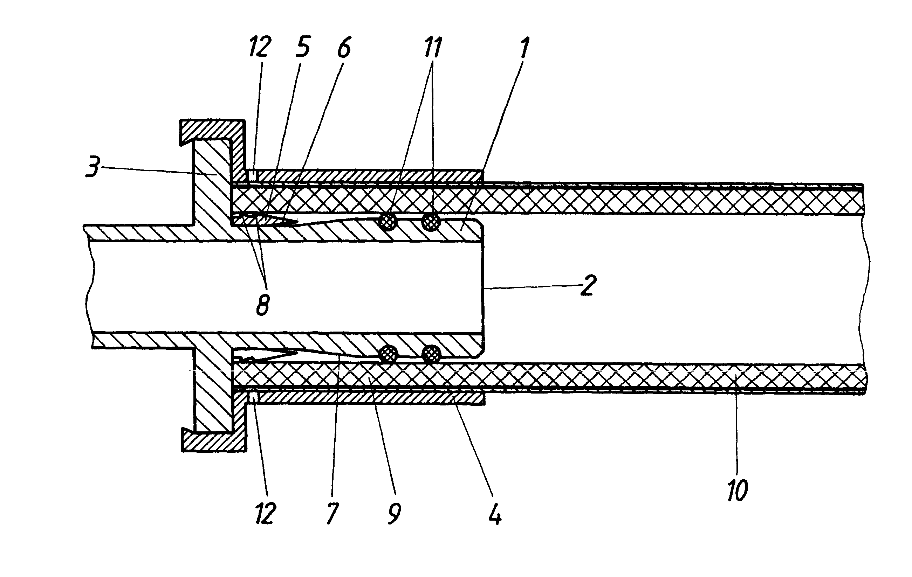

In der Zeichnung ist der Erfindungsgegenstand beispielsweise dargestellt, und zwar wird eine erfindungsgemäße Vorrichtung zum Anschließen eines Kunststoffrohres in einem vereinfachten Längsschnitt gezeigt.

Gemäß dem dargestellten Ausführungsbeispiel weist die Anschlußvorrichtung einen metallischen Anschlußnippel 1 mit einem vom freien Nippelende 2 zurückversetzten Anschlagflansch 3 auf, der schnappverschlußartig von einer den Anschlußnippel 1 mit Abstand konzentrisch umschließenden Hülse 4 übergriffen wird. Auf dem Anschlußnippel 1 ist eine geschlitzte Klemmhülse 5 gelagert, die mit einem sich gegen das freie Nippelende 2 hin erweiternden Innenkonus 6 versehen ist. Dieser Innenkonus 6 wirkt mit einem Gegenkonus 7 zusammen, der als sich ebenfalls gegen das freie Nippelende 2 hin erweiternder Außenkonus am Anschlußnippel 1 ausgeformt ist. Auf der dem Innenkonus 6 gegenüberliegenden Außenseite des Klemmringes 5 sind widerhakenartige Rückhaltekrallen 8 vorgesehen, die sich radial nach außen gegen das Anschlußende 9 eines Kunststoffrohres 10 erstrecken, das innerhalb der Hülse 4 auf den Aufstecknippel 1 aufgesteckt wird. Die flüssigkeitsdichte Verbindung zwischen dem Kunststoffrohr 10 und dem Anschlußnippel 1 wird durch eine Ringdichtungsanordnung 11 erreicht, die je nach den Anforderungen unterschiedlich ausgebildet werden kann.

Wird das Anschlußende 9 des Kunststoffrohres 10 auf den Anschlußnippel 1 bis zum stirnseitigen Anschlag am Anschlagflansch 3 aufgeschoben, so wird das Anschlußende 9 des Kunststoffrohres 10 auch über den Klemmring 5 und dessen Rückhaltekrallen 8 geschoben, wobei sich der Klemmring 5 bei seiner im Ausführungsbeispiel vorgesehenen freien axialen Verschiebbarkeit zwischen dem Anschlagflansch 3 und dem Gegenkonus 7 am Anschlagflansch 3 abstützt. Wegen der guten Maßhaltigkeit des Kunststoffrohres 10 im Bereich des auf den Strömungsquerschnitt bezogenen Nenndurchmessers kann mit einer sicheren Mitnahme des Klemmringes 5 über die Rückhaltekrallen 8 gerechnet werden, wenn das Kunststoffrohr 10 in Abziehrichtung einer Zugbelastung unterworfen wird. Diese Abziehbewegung schiebt den Klemmring 5 mit seinem Innenkonus auf den Gegenkonus auf, so daß der Klemmring 5 aufgeweitet wird, was mit einer festen Verkrallung zwischen dem Klemmring 5 und dem Anschlußende 9 des Kunststoffrohres 10 einhergeht. Die dadurch bedingte Aufweitung auch des Anschlußendes 9 des Kunststoffrohres 10 führt je nach dem Rohraußendurchmesser zu einer zusätzlichen Klemmung des Rohrmantels zwischen dem Klemmring 5 und der Hülse 4. Da der Außendurchmesser von Kunststoffrohren gleichen Nenndurchmessers einer erheblich größeren Schwankung als der Nenndurchmesser unterliegt, kann diese zusätzliche Klemmung unterschiedlich ausfallen, was jedoch keinen Einfluß auf die sichere Verkrallung zwischen dem Klemmring 5 und dem Anschlußende 9 des Kunststoffrohres 10 nimmt. Mit Hilfe der gezeigten Vorrichtung können daher Kunststoffrohre mit unterschiedlichem Aufbau sicher an einen Anschlußnippel 1 angeschlossen werden, was beispielsweise den Einsatz von Verbundrohren ermöglicht, wie es in der Zeichnung angedeutet ist.

Um das vollständige Aufschieben des Anschlußendes 9 des Kunststoffrohres 10 auf den Anschlußnippel 1 überwachen zu können, kann die Hülse 4 im Bereich des Anschlagflansches 3 mit wenigstens einer Schauöffnung 12 versehen sein, so daß auch bei dem aufgrund der engen Toleranzbereiche zwischen Klemmring 5 und Anschlußende 9 des Kunststoffrohres 10 zu erwartenden höheren Kraftbedarf das ordnungsgemäße Anschlagen des Anschlußendes 9 des Kunststoffrohres 10 am Anschlagflansch 3 optisch erfaßt werden kann.

## Patentansprüche

1. Anschlußvorrichtung für ein Kunststoffrohr (10) mit einer ein Anschlußende (9) des Kunststoffrohres (10) aufnehmenden Hülse (4), in der ein mit einem Gegenkonus (7) zusammenwirkender, axial verschiebbarer, konischer Klemmring (5) vorgesehen ist, der auf der dem Gegenkonus (7) abgekehrten Ringseite gegen die Rohrwandung vorstehende, widerhakenartige Rückhaltekrallen (8) für das Anschlußende (9) des Kunststoffrohres (10) aufweist, wobei das Anschlußende (9) des Kunststoffrohres (10) zwischen der Hülse (4) und einem Anschlußnippel (1) gehalten ist, **dadurch gekennzeichnet, daß** der Anschlußnippel (1) einen sich gegen das freie Nippelende (2) hin erweiternden Außenkonus als Gegenkonus (7) bildet und den mit einem Innenkonus (6) gegen das freie Nippelende (2) hin auf den Gegenkonus (7) aufschiebbaren Klemmring (5) trägt, dessen Rückhaltekrallen (8) radial nach außen abstehen.

2. Anschlußvorrichtung nach Anspruch 1, **dadurch gekennzeichnet, daß** die Hülse (4) mit einem vom freien Nippelende (2) zurückversetzten Anschlagflansch (3) für das Anschlußende (9) des Kunststoffrohres (10) in axialer Richtung verschiebefest verbindbar ist.

3. Anschlußvorrichtung nach Anspruch 2, **dadurch gekennzeichnet, daß** die Hülse (4) den Anschlagflansch (3) schnappverschlußartig übergreift.

4. Anschlußvorrichtung nach Anspruch 2 oder 3, **dadurch gekennzeichnet, daß** die Hülse (4) im Bereich des Anschlagflansches (3) wenigstens eine Schauöffnung (12) aufweist.

5. Anschlußvorrichtung nach einem der Ansprüche 2 bis 4, **dadurch gekennzeichnet, daß** der Klemmring (5) zwischen dem Gegenkonus (7) und dem Anschlagflansch (3) auf dem Anschlußnippel (1) axial frei verschiebbar gelagert ist.

## Claims

1. A connecting device for a plastic pipe (10) with a sleeve (4) which accommodates an end (9) of the plastic pipe (10) for connection, there being provided in the said sleeve (4) an axially displaceable conical clamping ring (5) which cooperates with a co-acting cone (7) and which, on the ring side remote from the co-acting cone (7), has barb-like retaining claws (8) for the end (9) of the plastic pipe (10) for connection, said retaining claws (8) projecting towards the pipe wall, the end (9) of the plastic pipie (10) for connection being held between the sleeve (4) and a connecting nipple (1), **characterised in that** the connecting nipple (1) forms an outer cone, which widens out towards the free end (2) of the nipple and which acts as a co-acting cone (7) and carries the clamping ring (5) which is adapted to be pushed with an inner cone (6) towards the free end (2) of the nipple onto the co-acting cone (7), the retaining claws (8) of said clamping ring projecting radially outwards.

2. A connecting device according to claim 1, **characterised in that** the sleeve (4) is adapted to be connected so as to be non-displaceable in the axial direction to an abutment flange (3) for the end (9) of the plastic pipe (10) for connection, said abutment flange (3) being set back from the free end (2) of the nipple.

3. A connecting device according to claim 2, **characterised in that** the sleeve (4) engages over the abutment flange (3) after the style of a snap fastener.

4. A connecting device according to claim 2 or 3, **characterised in that** the sleeve (4) has at least one inspection opening (12) in the region of the abutment flange (3).

5. A connecting device according to any one of claims 2 to 4, **characterised in that** the clamping ring (5) is mounted to be axially freely displaceable on the connecting nipple (1) between the co-acting cone (7) and the abutment flange (3).

## Revendications

1. Dispositif de raccordement pour un tuyau en matière synthétique (10), comprenant une douille (4) recevant une extrémité de raccordement (9) du tuyau en matière synthétique (10), douille dans laquelle est prévue une bague de serrage (5) conique, déplaçable axialement, coopérant avec un contre-cône (7), bague de serrage présentant sur la face annulaire, opposée au contre-cône (7), des griffes de retenue (8), du genre de contre-crochets, en saillie vers la paroi tubulaire, pour l'extrémité de raccordement (9) du tuyau en matière synthétique (10), sachant que l'extrémité de raccordement (9) du tuyau en matière synthétique (10) est maintenue entre la douille (4) et un embout de raccordement (1), **caractérisé en ce que** l'embout de raccordement (1) forme un cône extérieur, faisant office de contre-cône (7), allant en s'élargissant en allant vers l'extrémité d'embout (2) libre, et porte la bague de serrage (5) pouvant être enfilée sur le contre-cône (7), par un cône intérieur (6) vers l'extrémité d'embout (2) libre, bague de serrage dont les griffes de retenue (8) font saillie radialement vers l'extérieur.

2. Dispositif de raccordement selon la revendication 1, **caractérisé en ce que** la douille (4) est susceptible d'être reliée, de façon immobilisée en coulissement en direction axiale, à une bride de butée (3), en retrait de l'extrémité d'embout (2) libre, pour l'extrémité de raccordement (9) du tuyau en matière synthétique (10).

3. Dispositif de raccordement selon la revendication 2, **caractérisé en ce que** la douille (4) entoure la bride de butée (3) à la façon d'une fermeture à encliquetage.

4. Dispositif de raccordement selon la revendication 2 ou 3, **caractérisé en ce que** la douille (4) présente au moins une ouverture d'observation (12) dans la zone de la bride de butée (3).

5. Dispositif de raccordement selon l'une des revendications 2 à 4, **caractérisé en ce que** la bague de serrage (5) est montée de façon déplaçable axialement librement sur l'embout de raccordement (1), entre le contre-cône (7) et la bride de butée (3).
